# EUROPEAN PATENT SPECIFICATION

(11) **EP 1 681 316 B1**
(45) Date of publication and mention of the grant of the patent: **20.01.2010**
(21) Application number: 04799533.7
(22) Date of filing: 01.11.2004
(51) Int. Cl.: C08L 67/04, C08K 3/34, C08K 9/04, C08L 101/16, C08J 5/00

(54) **POLYLACTIC ACID RESIN COMPOSITION, PROCESS FOR PRODUCING THE SAME AND MOLDING THEREOF**
POLYMILCHSÄUREHARZZUSAMMENSETZUNG, HERSTELLUNGSVERFAHREN DAFÜR UND FORMKÖRPER DARAUS
COMPOSITION DE RESINE D'ACIDE POLYLACTIQUE, SON PROCEDE DE PRODUCTION ET DE MOULAGE

(30) Priority: 05.11.2003 JP 2003376039
(43) Date of publication of application: 19.07.2006
(73) Proprietor: Toyota Jidosha Kabushiki Kaisha, Toyota-shi, Aichi 471-8571 (JP)
(72) Inventor: OUCHI, Makoto, Kyoto-shi, Kyoto 6158275 (JP); OKAMOTO, Hirotaka, Aichi-gun Aichi 4801192 (JP); NAKANO, Mitsuru, Aichi-gun Aichi 4801192 (JP); USUKI, Arimitsu, Aichi-gun Aichi 4801192 (JP); KANAMORI, Takeshi, Toyota-shi Aichi 4718571 (JP); OKUYAMA, Hisashi, Toyota-shi Aichi 4718571 (JP); YAMASHITA, Seiji, Toyota-shi Aichi 4718571 (JP); KAGEYAMA, Yuji, Toyota-shi Aichi 4718571 (JP)
(74) Representative: Kuhnen & Wacker
(86) International application number: PCT/JP2004/016510
(87) International publication number: WO 2005/044918

(56) References cited:
- JP-A- 2003 073 538
- JP-A- 2003 119 398

## Description

### Technical Field

The present invention relates to a polylactic acid resin composition, a process for producing the same, and a molded article obtained by melt molding and crystallizing the same.

### Background Art

Polylactic acid decomposes by the action of microbes and enzymes, biodegradable, and is converted into lactic acid, carbon dioxide and water harmless to the human body. Thus, polylactic acid has attracted attention as an alternative to medical materials and general-purpose resins. Although polylactic acid is a crystalline resin, polylactic acid is crystallized at a low rate, and exhibits a behavior practically similar to that of noncrystalline resins. Namely, since polylactic acid is softened rapidly and extremely at about the glass transition temperature (typically, less than 1/100 in elastic modulus), it has been difficult to attain sufficient properties such as heat resistance, moldability and mold releasability.

For improving such problems, JP Patent Publication (Kokai) No. 2003-128900 (Patent Document 1) discloses the use of a polylactic acid stereocomplex obtained by mixing poly-L-lactic acid (PLLA) and poly-D-lactic acid (PDLA) in a molten state, and describes that the polylactic acid stereocomplex exhibits a high melting point and a high crystallinity, and molded article excellent in heat resistance can be obtained.

JP Patent Publication (Kokai) No. 2003-96285 (Patent Document 2) also describes a polylactic acid resin composition obtained by melt mixing poly-L-lactic acid and poly-D-lactic acid, characterized by satisfying the condition where the weight-average molecular weight Mw(A) of poly-L-lactic acid and the weight-average molecular weight Mw(B) of poly-D-lactic acid have a relation: [Mw(A)-Mw(B)] ≥ 50,000.

JP Patent Publication (Kokai) No. 2003-73538 (Patent Document 3) describes a polylactic acid resin composite material comprising a polylactic acid and a lamellar clay mineral bonded to the polylactic acid.

However, neither of the processes described in JP Patent Publication (Kokai) No. 2003-128900 and JP Patent Publication (Kokai) No. 2003-96285 results in a sufficiently high ratio of stereocrystals (stereocomplex crystals) of poly-L-lactic acid and poly-D-lactic acid, and does not sufficiently improve heat resistance.
Patent Document 1: JP Patent Publication (Kokai) No. 2003-128900
Patent Document 2: JP Patent Publication (Kokai) No. 2003-96285
Patent document 3: JP Patent Publication (Kokai) No. 2003-73538

### Disclosure of the Invention

The present invention has been achieved in view of problems that the conventional techniques described above have, and has an object to provide a polylactic acid resin composition in which stereocrystals of poly-L-lactic acid and poly-D-lactic acid can be selectively crystallized to obtain polylactic acid having a sufficiently high stereocrystals ratio, a process for producing the same and a polylactic acid molded article obtained from the same having a sufficiently high stereocrystals ratio.

As a result of extensive studies to achieve the above object, the present inventors have found that a polylactic acid resin composition consisting of one of poly-L-lactic acid and poly-D-lactic acid which is bonded to a lamellar clay mineral and the other of poly-L-lactic acid and poly-D-lactic acid which is not bonded to the lamellar clay mineral remarkably improve the stereocrystals selectivity, thereby obtaining polylactic acid having a sufficiently high stereocrystals ratio. This finding has led to the completion of the present invention.

That is, the polylactic acid resin composition of the present invention is characterized by comprising a polylactic acid-lamellar clay mineral bonded body consisting of a lamellar clay mineral and one of poly-L-lactic acid and poly-D-lactic acid which is bonded to the lamellar clay mineral, and the other of poly-L-lactic acid and poly-D-lactic acid which is not bonded to the lamellar clay mineral.

The molded article of the present invention is characterized in that the molded article is obtained by melt molding and crystallizing a polylactic acid resin composition which comprises a polylactic acid-lamellar clay mineral bonded body consisting of a lamellar clay mineral and one of poly-L-lactic acid and poly-D-lactic acid which is bonded to the lamellar clay mineral, and the other of poly-L-lactic acid and poly-D-lactic acid which is not bonded to the lamellar clay mineral.

Examples of processes to obtain the polylactic acid-lamellar clay mineral bonded body of the present invention include several ones, but a method using a lamellar clay mineral, described below, organized with an organic onium salt having a hydroxyl group is preferable.

That is, the polylactic acid-lamellar clay mineral bonded body of the present invention is preferably a polylactic acid-lamellar clay mineral bonded body which is consisting of a lamellar clay mineral organized with an organic onium salt having a hydroxyl group and one of poly-L-lactic acid and poly-D-lactic acid which is bonded to the lamellar clay mineral through the hydroxyl group of the organic onium salt.

Besides, the polylactic acid-lamellar clay mineral bonded body of the present invention is more preferably poly-L-lactic acid-lamellar clay mineral bonded body or poly-D-lactic acid-lamellar clay mineral bonded body obtained by mixing a lamellar clay mineral organized with an organic onium salt having a hydroxyl group with polymerizable monomers of L-lactic acid and/or L-lactide or polymerizable monomers of D-lactic acid and/or D-lactide, and polymerizing the polymerizable monomers with the hydroxyl group of the organic onium salt as a reaction site.

The molded article of the present invention obtained with the polylactic acid resin composition of the present invention is preferably a molded article whose stereocrystals ratio ΔHm, stereo/(ΔHm, homo + ΔHm, stereo)) × 100(%)}, determined from a melting endotherm (ΔHm, homo) of a homocrystals melting peak and a melting endotherm (ΔHm, stereo) of a stereocrystals melting peak measured by the DSC measurement (differential scanning calorimetry), are 0.9X% or more, wherein X is two times the value which is a smaller one of the content (A%) of poly-L-lactic acid and the content (B%) of poly-D-lactic acid, provided that A + B = 100%.

The processes for producing the polylactic acid resin composition of the present invention are:
(i) a process characterized by comprising a polymerizing step of mixing a lamellar clay mineral organized with an organic onium salt having a hydroxyl group with polymerizable monomers of L-lactic acid and/or L-lactide, polymerizing the polymerizable monomers with the hydroxyl group of the organic onium salt as a reaction site to obtain poly-L-lactic acid-lamellar clay mineral bonded body, and a mixing step of mixing the poly-L-lactic acid-lamellar clay mineral bonded body with poly-D-lactic acid which is not bonded to the lamellar clay mineral; and
(ii) a process characterized by comprising a polymerizing step by mixing a lamellar clay mineral organized with an organic onium salt having a hydroxyl group with polymerizable monomers of D-lactic acid and/or D-lactide, polymerizing the polymerizable monomers with the hydroxyl group of the organic onium salt as a reaction site to obtain poly-D-lactic acid-lamellar clay mineral bonded body, and a mixing step of mixing the poly-D-lactic acid-lamellar clay mineral bonded body with poly-L-lactic acid which is not bonded to the lamellar clay mineral.

Here, the stereocrystals of poly-L-lactic acid and poly-D-lactic acid mean the eutectic crystal in which poly-L-lactic acid molecules and poly-D-lactic acid molecules make a racemic crystals structure, and are also called stereocomplex crystals. Then, the melting point (melting peak by DSC) of homocrystals of poly-L-lactic acid or poly-D-lactic acid is generally 160 to 180°C, and in contrast, the melting point (melting peak by DSC) of stereocrystals thereof is generally 190 to 240°C.

Although the reason for the stereocrystals selectivity to be remarkably improved according to a polylactic acid resin composition of the present invention is not necessarily convincing, the inventors infer as follows. That is, in the present invention, one of two kinds of polylactic acids (PLLA, PDLA) different in stereostructure is bonded to a lamellar clay mineral, resulting in its movability being restricted, and hence crystallization (homocrystallization) of the polylactic acid bonding to the lamellar clay mineral becomes difficult to occur. As a result, crystallization between the free polylactic acid not bonding to the lamellar clay mineral and the polylactic acid different in stereostructure bonding to the lamellar clay mineral becomes easy to occur, resulting in the remarkably improved selectivity , of the stereocrystals.

The present invention provides a polylactic acid resin composition in which stereocrystals of poly-L-lactic acid and poly-D-lactic acid can selectively be crystallized to obtain a polylactic acid having a sufficiently high stereocrystals ratio, and a molded article having a sufficiently high stereocrystals ratio can be obtained by melt molding and crystallizing the polylactic acid resin composition. According to the production process of the present invention, the polylactic acid resin composition of the present invention can be efficiently and reliably obtained.

The present specification includes the content described in the specification and/or the drawings of Japanese Patent Application No. 2003-376039, on which the priority of the present application is based.

### Best Mode for Carrying Out the Invention

Hereinafter, the present invention will be described in detail by way of suitable embodiments.

The polylactic acid resin composition of the present invention is characterized by comprising a polylactic acid-lamellar clay mineral bonded body consisting of a lamellar clay mineral and one of poly-L-lactic acid and poly-D-lactic acid which is bonded to the lamellar clay mineral, and the other of poly-L-lactic acid and poly-D-lactic acid which is not bonded to the lamellar clay mineral.

First, lamellar clay minerals of the present invention will be illustrated. Examples of lamellar clay minerals of the present invention are not especially limited, but specifically include sumectites such as montmorillonite, beidellite, saponite and hectorite, kaolinites such as kaolinite and halloysite, vermiculites such as dioctahedral vermiculite and trioctahedral vermiculite, and micas such as taeniolite, tetrasilicic mica, muscovite, illite, sericite, phlogopite and biotite. These lamellar clay minerals may be natural ones or synthetic ones by the hydrothermal synthesis, the melting method, the solid phase method, etc. In the present invention, the above lamellar clay minerals can be used alone in one kind or in combination of two or more kinds. The cation exchange capacity of the lamellar clay minerals is preferably 30 to 300 meq/100 g.

The lamellar clay minerals of the present invention are preferably ones organized by an organic onium salt having a hydroxyl group as follows. The organic onium salts having a hydroxyl group of the present invention represent onium salts such as organic ammonium salt, organic phosphonium salt, organic pyridinium salt and organic sulfonium salt in which a hydroxyl group is bonded to the organic group. They organize the lamellar clay mineral to expand the interlamellar distance and to cause a polylactic acid and the lamellar clay mineral to be bonded through the hydroxyl group. In the present invention, "organizing" represents making an organic substance absorbed and/or bonded to the interlamellars and/or to the surface of a lamellar clay mineral by a physical, chemical method (preferably chemical method).

The organic onium salt having a hydroxyl group of the present invention is one having a hydroxyl group, especially not limited, but preferably one in which at least one of substituent groups of the organic onium salt has at least 6 carbon atoms. If a substituent group having a largest number of carbon atoms among the substituent groups of the onium salt has less than 6 carbon atoms, the interlamellar distance of the lamellar clay mineral is not sufficiently expanded, then bringing about a tendency of the homogeneous dispersion of the lamellar clay mineral in a polylactic acid to become difficult.

The content of an organic onium salt having a hydroxyl group is preferably 10 to 150 parts by weight based on 100 parts by weight of a lamellar clay mineral, more preferably 20 to 100 parts by weight. If the content of an organic onium salt is less than the lower limit, the interlamellar distance of the lamellar clay mineral is not sufficiently expanded, then bringing about a tendency of the homogeneous dispersion of the lamellar clay mineral in a polylactic acid to become difficult. By contrast, if the content of an organic onium salt is more than the upper limit, the quantity of the organic onium salt introduced by physical adsorption increases, then bringing about a tendency of the physical properties of the resin composition to be deteriorated (e.g. plasticization).

As an organic onium salt having a hydroxyl group preferably used in the present invention, an organic ammonium salt expressed by the general formula below (1) or (2) is exemplified. These organic ammonium salts can be used alone in one kind or in combination of both the kinds.

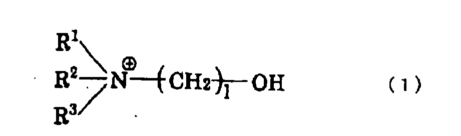

In the formula, R¹, R² and R³ may be identical or different, and each represent a group selected from the group consisting of a hydrogen atom, an alkyl group and an aryl group; I represents an integer of 1 to 20; and at least one group of R¹, R², R³ and -(CH₂)₁-OH has at least 6 carbon atoms.

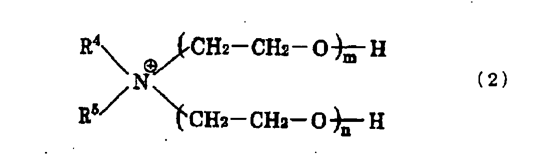

In the formula, R⁴, and R⁵ may be identical or different, and each represent a group selected from the group consisting of a hydrogen atom, an alkyl group and an aryl group; m and n may be identical or different, each an integer of 1 to 20; and at least one group of R⁴, R⁵, -(CH₂-CH₂-O)ₘ-H and -(CH₂-CH₂-O)ₙ-H has at least 6 carbon atoms.

R¹, R²and R³ in the above general formula (1) may be identical or different, and each expresses a group selected from the group consisting of a hydrogen atom, an alkyl group and an aryl group. Examples of such alkyl groups specifically include a methyl group, ethyl group, n-propyl group, i-propyl group, n-butyl group, sec-butyl group, tert-butyl group, linear or branched pentyl group, linear or branched hexyl group, linear or branched heptyl group, linear or branched octyl group, linear or branched nonyl group, linear or branched decyl group, linear or branched undecyl group, linear or branched dodecyl group, linear or branched tridecyl group, linear or branched tetradecyl group, linear or branched pentadecyl group, linear or branched octadecyl group and benzyl group, and these alkyl groups have preferably 1 to 20 carbon atoms. If the carbon number of an alkyl group exceeds the upper limit above, the synthesis of the organic onium salts tends to become difficult. Examples of such aryl groups specifically include a phenyl group, tolyl group and xylyl group.

In the above general formula (1), "1" represents a polymerization degree of methylene group (-CH₂-), and is an integer of 1 to 20, preferably 6 to 20, more preferably 8 to 18. If "1" exceeds 20, the synthesis of the organic onium salts tends to become difficult.

Further, at least one group of R¹, R², R³ and -(CH₂)₁-OH in the above general formula (1) has at least 6 (preferably at least 8) carbon atoms. If every group has less than 6 carbon atoms, the interlamellar distance of the lamellar clay mineral is not sufficiently expanded, then bringing about a tendency of the homogeneous dispersion of the lamellar clay mineral in a polylactic acid to become difficult.

R⁴, and R⁵ in the above general formula (2) may be identical or different, and each represents a group selected from the group consisting of a hydrogen atom, an alkyl group and an aryl group. Examples of such alkyl group and aryl group include the alkyl groups and aryl groups exemplified in the illustration of R¹, R² and R³ in the general formula (1).

In the above general formula (2), n and m represent a polymerization degree of oxyethylene group (-CH₂-CH₂-O-), and each is an integer of 1 to 20, preferably an integer of 1 to 10, more preferably an integer of 1 to 5, and most preferably 1. If m or n exceeds 20, the hydrophilicity of the lamellar clay mineral becomes excessively high, then bringing about a tendency of the preparation to become difficult. Here, m and n may be identical or different.

Further, at least one group of R⁴, R⁵, -(CH₂-CH₂-O)ₘ-H and -(CH₂-CH₂-O)ₙ-H in the above general formula (2) has at least 6 (preferably at least 8) carbon atoms. If every group has less than 6 carbon atoms, the interlamellar distance of the lamellar clay mineral is not sufficiently expanded, then bringing about a tendency of the homogeneous dispersion of the lamellar clay mineral in a polylactic acid to become difficult. For example, a compound in which R⁴ is a hydrogen atom, and R⁵ is a dodecyl group, a compound in which R⁴ is a methyl group, and R⁵ is an octadecyl group, and a compound in which R⁴ and R⁵ are each an octadecyl group are preferably used as a compound satisfying the above condition.

In the present invention, a lamellar clay mineral organized by a mixture of an organic onium salt having a hydroxyl group and an organic onium salt not having a hydroxyl group can be used. By using together an organic onium salt having a hydroxyl group and an organic onium salt not having a hydroxyl group in such a manner, the adding quantity of the lamellar clay mineral can be increased while the dispersion homogeneity of the lamellar clay mineral is maintained in a high level. The means to use the organic onium salts in combination in such a way is especially effective in a manufacturing method of a polylactic acid resin composition described later of the present invention. Besides, when polymerizable monomers are polymerized with the hydroxyl group of an organic onium salt as a reaction site, the molecular weight of the produced polylactic acid can be adjusted by properly selecting the content of these two organic onium salts. Therefore, the adding quantity of the lamellar clay mineral can be increased without the decrease in the molecular weight of the polylactic acid.

As an organic onium salt not having a hydroxyl group, used preferably in the present invention, an organic onium salt expressed by the below general formula (3) is exemplified.

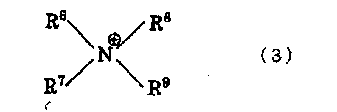

In the formula, R⁶, R⁷, R⁸, and R⁹ may be identical or different, and each represent a group selected from the group consisting of a hydrogen atom, an alkyl group and an aryl group; and at least one group of R⁶, R⁷, R⁸, and R⁹ has at least 6 carbon atoms.

In the above general formula (3), R⁶, R⁷, R⁸, and R⁹ may be identical or different, and each expresses a group selected from the group consisting of a hydrogen atom, an alkyl group and an aryl group. Examples of such alkyl groups and aryl groups include the alkyl groups and aryl groups exemplified in the illustration of R¹, R² and R³ in the general formula (1).

In the above general formula (3), at least one group of R⁶, R⁷, R⁸, and R⁹ has at least 6 (at least 8) carbon atoms. When every group has less than 6 carbon atoms, further expansion of the interlamellar distance of the lamellar clay mineral by organization with the organic onium salt becomes difficult, and providing a dispersion effect of the lamellar clay mineral in a polylactic acid then becomes difficult. In the present invention, an organic phosphonium salt in which P (phosphorus atom) is substituted for N (nitrogen atom) in the above general formula (3) can be alternatively used.

In the case where an organic onium salt having a hydroxyl group and an organic onium salt not having a hydroxyl group are used in combination, the formulation ratio of the organic onium salt having a hydroxyl group is preferably at least 5 mol%, more preferably at least 10 mol%, and further preferably 15 mol%. If the formulation ratio of an organic onium salt having a hydroxyl group is less than 5 mol%, the affinity with a polylactic acid or a polymerizable monomer (lactic acid, lactide) becomes insufficient, then bringing about a tendency of these not to be stably held interlamellarly in the lamellar clay mineral.

The interlamellar distance of a lamellar clay mineral contained in a polylactic acid resin composition of the present invention is preferably at least 5 nm on a basis of the average distance between the centers of gravity of the layers, more preferably at least 10 nm. If the interlamellar distance of the lamellar clay mineral is less than 5 nm, the dispersibility of the polylactic acid has a tendency to become insufficient.

Next, poly-L-lactic acid and poly-D-lactic acid of the present invention will be explained. The poly-L-lactic acid is a polymer having a repeating unit expressed by the following general formula (4): 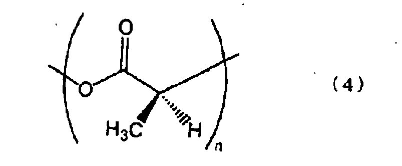 wherein n is an integer, while
the poly-D-lactic acid is a polymer having a repeating unit expressed by the general formula (5) below: 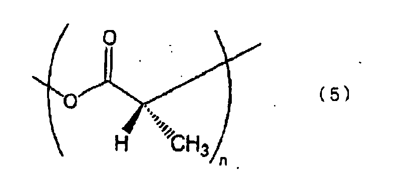 wherein n is an integer. Both have an enantiomorphic relationship (enantiomers).

Then, a polylactic acid resin composition of the present invention contains both of poly-L-lactic acid and poly-D-lactic acid which have different stereostructures in such a manner and are optically active; one of the poly-L-lactic acid and the poly-D-lactic acid is bonded to the lamellar clay mineral (preferably, bonded thereto through a hydroxyl group of the organic onium salt of the lamellar clay mineral), and the one is contained as a polylactic acid-lamellar clay mineral bonded body. Then, the other of the poly-L-lactic acid and the poly-D-lactic acid is contained in the state of not bonding to the lamellar clay mineral. That is, a polylactic acid contained in the state of bonding to the lamellar clay mineral can be either of poly-L-lactic acid and poly-D-lactic acid, namely, either of (i) a combination of poly-L-lactic acid-lamellar clay mineral bonded body and poly-D-lactic acid and (ii) a combination of poly-D-lactic acid-lamellar clay mineral bonded body and poly-L-lactic acid.

In the present invention, the entire of the polylactic acid which is contained as a polylactic acid-lamellar clay mineral bonded body need not bond to the lamellar clay mineral, but it is preferable that 10 wt% or more thereof bond to the lamellar clay mineral. The content of the organized lamellar clay mineral to the polylactic acid constituting a polylactic acid-lamellar clay mineral bonded body is preferably 0.01 to 30 parts by weight to 100 parts by weight, more preferably 0.1 to 20 parts by weight, based on the latter. With the lamellar clay mineral of less than the lower limit, the degree of selectivity improvement of stereocrystals tends to become insufficient, while, with that exceeding the upper limit, the polylactic acid cannot form a continuous phase, and the rigidity tends to decrease.

One end of the polylactic acid constituting a polylactic acid-lamellar clay mineral bonded body is bonded (preferably, bonded through the hydroxyl group of an organic onium salt) with the lamellar clay mineral. To the other end thereof, another polymerizable monomer such as glycolide and caprolactam may further be polymerized to obtain a copolymer. The polymerization chain from the another polymerizable monomer is preferably 50 mol% or less based on the entire, of the copolymer.

Further, the weight-average molecular weight of the polylactic acid constituting the polylactic acid-lamellar clay mineral bonded body is not especially limited, but preferably at least 5,000, more preferably at least 10,000; further preferably at least 20,000. Besides, the weight-average molecular weight of such polylactic acid is preferably at most 400,000. With the weight-average molecular weight of less than the lower limit, mechanical properties such as strength and elastic modulus tend to become insufficient, and by contrast, with that exceeding the upper limit, insufficient molding processability and a low stereocrystals ratio tend to be brought about.

A preparing method of a polylactic acid-lamellar clay mineral bonded body of the present invention is not especially limited, but preferably a process for producing a polylactic acid resin composition of the present invention described later. That is, a polylactic acid-lamellar clay mineral bonded body of the present invention is preferably (i) poly-L-lactic acid-lamellar clay mineral obtained by mixing a lamellar clay mineral organized by an organic onium salt having a hydroxyl group with polymerizable monomers of L-lactic acid and/or L-lactide acid, and polymerizing the polymerizable monomers with the hydroxyl group of the organic onium salt as a reaction site, or (ii) poly-D-lactic acid-lamellar clay mineral obtained by mixing a lamellar clay mineral organized by an organic onium salt having a hydroxyl group with polymerizable monomers of D-lactic acid and/or D-lactide, and polymerizing the polymerizable monomers with the hydroxyl group of the organic onium salt as a reaction site.

The weight-average molecular weight of a polylactic acid contained in the state of not bonding to the lamellar clay mineral is not especially limited, but preferably at least 10,000, more preferably at least 30,000, further preferably at least 50,000. The weight-average molecular weight of such polylactic acid is preferably at most 400,000. With the weight-average molecular weight of less than the lower limit, mechanical properties such as strength and elastic modulus tend to become insufficient, and by contrast, with that exceeding the upper limit tends to bring about insufficient molding processability.

The preparation method of the polylactic acid contained in the state of not bonding to the lamellar clay mineral is not especially limited, but it may be a direct polymerization of L-lactic acid or D-lactic acid, or a ring-opening polymerization of L-lactide or D-lactide, which is a cyclic dimer of lactic acid.

The polylactic acid resin composition of the present invention contains the above polylactic acid-lamellar clay mineral bonded body (poly-L-lactic acid-lamellar clay mineral bonded body or poly-D-lactic acid-lamellar clay mineral bonded body) and a polylactic acid (poly-D-lactic acid or poly-L-lactic acid) as is the enatiomer thereof, in which the blending ratio of the poly-L-lactic acid to the poly-D-lactic acid is preferably 1 to 99 wt%: 99 to 1 wt%, more preferably 30 to 70 wt%: 70 to 30 wt%, especially preferably 40 to 60 wt%: 60 to 40 wt%. The larger difference in the contents of the poly-L-lactic acid and the poly-D-lactic acid tends to bring about a less content of the stereocrystals in molded article obtained, and to decrease the degree of improvement in crystallization speed.

The optical purities of the poly-L-lactic acid and the poly-D-lactic acid of the present invention are each preferably at least 85 mol%, more preferably at least 90 mol%, further preferably at least 95 mol%, most preferably at least 98 mol%. If the optical purities of the poly-L-lactic acid and the poly-D-lactic acid are less than the lower limit, the crystallization is inhibited due to decrease in stereoregularity, then bringing about a tendency of the effect obtained by the present invention not to sufficiently develop.

In a polylactic acid resin composition of the present invention, as long as the properties are not damaged, a crystallization promoter such as an amide compound, a filler such as talc, a plasticizer, a pigment, a stabilizer, an antistatic agent, an ultraviolet absorbent, an antioxidant, a flame retarder, a mold releasing agent, a lubricant, a dye, an antibacterial, and an additive such as a terminal blocking agent may further be added. The content of these additives is preferably at most 20 wt% in a polylactic acid resin composition of the present invention.

Next, a process for producing a polylactic acid resin composition of the present invention will be illustrated.

First, a manufacturing method of a lamellar clay mineral organized by an organic onium salt having a hydroxyl group is not especially limited, and can be performed by the method, for example, disclosed in JP Patent No. 2627194 by the present applicant. Namely, the organization of a lamellar clay mineral can be performed by ion exchanging inorganic ions in the lamellar clay mineral for organic onium ions (e.g. organic ammonium ions in an organic ammonium salt) generated from an organic onium salt having a hydroxyl group.

More specifically, for example, in the case of using an organic ammonium salt having a hydroxyl group, the organization can be performed by a following method. In the case of using a massive lamellar clay mineral, this is first crushed into powder by a ball mill or the like. Then, the powder is dispersed in water by a mixer or the like to obtain a water-dispersion of the lamellar clay mineral. Separately from this, an aqueous solution of an organic ammonium salt having a hydroxyl group is prepared by adding an organic amine having a hydroxyl group and an acid such as hydrochloric acid to water. By adding and mixing the solution with the water-dispersion of the lamellar clay mineral, the inorganic ions in the lamellar clay mineral are ion exchanged for the organic ammonium ions having a hydroxyl group generated from the organic ammonium salt. Water is removed from the mixture to obtain an organized lamellar clay mineral.

As a dispersion medium for an organic ammonium salt and a lamellar clay mineral, methanol, ethanol, propanol, isopropanol, ethyleneglycol and a mixture thereof and a mixture thereof with water can be used besides water.

In the process for producing a polylactic acid resin composition of the present invention, (i) poly-L-lactic acid-lamellar clay mineral bonded body or (ii) poly-D-lactic acid-lamellar clay mineral bonded body is obtained by mixing the thus obtained organized lamellar clay mineral organized with an organic onium salt having a hydroxyl group with polymerizable monomers of (i) L-lactic acid and/or L-lactide or (ii) D-lactic acid and/or D-lactide, and polymerizing the polymerizable monomers with the hydroxyl group of the organic onium salt as a reaction site (polymerization step).

Here, in the case of using L-lactic acid or D-lactic acid, a polylactic acid is produced by the direct polycondensation thereof, and on the other hand, in the case of using L-lactid or D-lactide, a polylactic acid is produced by the ring-opening polymerization thereof. In the method according to the present invention, since such polymerization reaction progresses in the presence of the lamellar clay mineral organized by an organic onium salt having a hydroxyl group, for example, in the method for the ring-opening polymerization of lactide, the ring-opening polymerization of lactide progresses with the hydroxyl group of the organizing agent as a reaction site, to obtain a polylactic acid bonding to the lamellar clay mineral.

These polymerizations can be performed either using a predetermined catalyst or with no catalyst. Examples of catalysts specifically include tin octylate, tin chloride, zinc chloride, lead oxide, lead carbonate, titanium chloride, alkoxy titanium, germanium oxide and zirconium oxide. The use quantity is preferably 0.001 to 1 parts by weight based on 100 parts by weight of the polymerizable monomer. The reaction temperature in the polymerization step is preferably about 100 to 200°C.

Then, in the process for producing a polylactic acid resin composition of the present invention, by mixing (i) the poly-L-lactic acid-lamellar clay mineral bonded body and the poly-D-lactic acid not bonding to the lamellar clay mineral or (ii) the poly-D-lactic acid-lamellar clay mineral bonded body and the poly-L-lactic acid not bonding to the lamellar clay mineral, all of which are obtained above (mixing step), the polylactic acid resin composition described above is effectively and securely obtained.

The method of mixing (blending) a polylactic acid-lamellar clay mineral bonded body and a polylactic acid as is the enantiomer thereof in such a manner is not especially limited, and may be one in which both are mixed using a solvent such as chloroform, which is removed thereafter, or one in which both are heated and melt mixed at a temperature of about 160 to 250°C.

Next, the molded article of the present invention will be illustrated. That is, the molded article of the present invention is a molded article obtained by melt molding and crystallizing the polylactic acid resin composition of the present invention described above.

In manufacturing the molded article of the present invention, the temperature of melting the polylactic acid resin composition is preferably 160 to 250°C. With the temperature of less than the lower limit, the melting of the polylactic acid resin composition tends to be insufficient, and the homogeneous dispersion of the components tends to be difficult. By contrast, with the temperature exceeding the upper limit, the properties of obtained molded article tend to be damaged because of the decreased molecular weight of the polylactic acid.

The retention time in the melting temperature is preferably 0.1 to 30 min. With the retention time of less than the lower limit, the melting of the polylactic acid resin composition tends to be insufficient, and by contrast, with that exceeding the upper limit, the molecular weight of the polylactic acid tends to decrease, bringing about a tendency of the properties of the molded article to be damaged.

Then, a method of crystallizing the molten polylactic acid resin composition preferably involves cooling from the melting state to a temperature of 60 to 160°C, and retaining the temperature for 10 sec to 30 min. With the retention time of less than the lower limit, the crystallization of the obtained molded article tends to be insufficient, and by contrast, with that exceeding the upper limit, a long hour is needed to obtain the molded article, which is practically an unpreferable tendency.

Further, in manufacturing the molded article of the present invention, the molding method is not especially limited, and any of the injection molding, extrusion molding, blow molding, inflation molding, profile extrusion molding, injection-blow molding, vacuum-pressure molding, spinning and the like can suitably be used. Then, since a relatively high crystallization speed is achieved if based on the polylactic acid resin composition of the present invention, for example, even in the case of using the injection molding therefor, it becomes possible for a polylactic acid having a sufficient crystallinity and a high stereocrystals ratio to be obtained. The shape, thickness and the like of the molded article of the present invention are not especially limited, and any of an injection molded article, extrusion molded article, compression molded article, blow molded article, sheet, film, yarn, fabric and the like is allowable.

The molded article of the present invention obtained in such a manner from the polylactic acid resin composition according to the present invention are preferably a molded article whose stereocrystals ratio {(ΔHm, stereo/(ΔHm, homo + ΔHm, stereo)) x 100(%)}, determined from a melting endotherm (ΔHm, homo) of a homocrystals melting peak and a melting endotherm (ΔHm, stereo) of a stereocrystals melting peak measured by the DSC measurement (differential scanning calorimetry), is preferably at least 0.9X%. Here, X is, with the proviso that the total of the content (A%) of the poly-L-lactic acid and the content (B%) of the poly-D-lactic acid in the polylactic acid resin composition is 100% (A + B = 100%), two times the value which is a smaller one of the content (A%) of the poly-L-lactic acid and the content (B%) of the poly-D-lactic acid. For example, (i) with the proviso that the content (A%) of the poly-L-lactic acid is 50% and that the content (B%) of the poly-D-lactic acid is 50%, the stereocrystals ratio is preferably at least 90%. (ii) With the proviso that the content (A%) of the poly-L-lactic acid is 30% and that the content (B%) of the poly-D-lactic acid is 70%, the stereocrystals ratio is preferably at least 54%. The higher ratio of the stereocrystals in the crystalline part of the obtained molded article brings about a tendency of the heat resistance of the molded article to be improved.

Now, the measurement of the crystals melting heat by the DSC above is specifically by a method as follows. First, as part (5 to 10 mg) of a sample (the polylactic acid resin composition) is put in an aluminum pan, and measured for the various heat quantities below by using the DSC (differential scanning calorimeter, for example, DSC7 manufactured by Perkin Elmer Inc.) under a nitrogen atmosphere while the temperature is shifted as follows. The sample is raised from 30°C to 250°C at a temperature-rising rate of 50°C/min, held at 250°C for 5 min to be melted, and thereafter cooled at a cooling rate of 500°C/min to a predetermined retention temperature {a predetermined temperature between (A)°C=60 to 160°C}, and held at (A)°C for 20 min to be crystallized. Then, the sample is again raised from (A)°C to 250°C at a temperature-rising rate of 10°C, and measured for the peak top temperature and absorbed heat quantity of a peak by the crystals melt emerging on the way. That is, the melting temperature (Tm, homo) and the absorbed quantity of melting (ΔHm, homo) of a homocrystals melting peak whose peak top emerges at 160°C to 180°C, and the melting temperature (Tm, stereo) and the absorbed quantity of melting (ΔHm, stereo) of a stereocomplex crystals melting peak whose peak top emerges at 190°C to 230°C are determined. Then, from the absorbed quantity of melting (ΔHm, homo) of a homocrystals melting peak and the absorbed quantity of melting (ΔHm, stereo) of a stereocomplex crystals melting peak determined in such a manner by the DSC measurement, the stereocrystals ratio {(ΔHm, stereo/(ΔHm, homo + ΔHm, stereo)) x 100(%)} is calculated. Here, the melting temperature is let to be the peak top temperature.

Processes of obtaining a polylactic acid-lamellar clay mineral bonded body are not limited to the processes in the embodiment described before, and other examples include following processes.
(i) A method in which an organic onium salt having a hydroxyl group and at least one kind of polymerizable monomer selected from the group consisting of L-lactic acid and L-lactide or at least one kind of polymerizable monomer selected from the group consisting of D-lactic acid and D-lactide are mixed; the polymerizable monomer is polymerized with the hydroxyl group of the organic onium salt as a reaction site to obtain poly-L-lactic acid-organic onium salt bonded body or poly-D-lactic acid-organic onium salt bonded body; and thereafter, the poly-L-lactic acid-organic onium salt bonded body or the poly-D-lactic acid-organic onium salt bonded body and a lamellar clay mineral are mixed to obtain poly.-L-lactic acid-lamellar clay mineral bonded body or poly-D-lactic acid-lamellar clay mineral bonded body.
(ii) A method in which a lamellar clay mineral organized by an organic onium salt having an ester group and poly-L-lactic acid or poly-D-lactic acid are transestrified to obtain poly-L-lactic acid-lamellar clay mineral bonded body or poly-D-lactic acid-lamellar clay mineral bonded body.

Hereinafter, the present invention will be more specifically illustrated by way of examples and comparative examples, but is not limited to the examples below.

### [Example 1]

### (Organization of a lamellar clay mineral)

Sodium-type montmorillonite (Kunipia F, manufactured by Kunimine Industries Co. Ltd., cation exchange capacity: 115 meq/100 g) of 100 g was dispersed in water at 80°C of 5,000 ml; dihydroxyethylmethylstearylammonium bromide of 59.2 g was dissolved in water at 80°C of 2,000 ml; thereafter, both was mixed, and the organization of montmorillonite was performed; and the resultant organized montmorillonite (hereinafter, referred to as 18(OH)₂-Mont) was washed three times with water at 80°C, freeze-dried, and then crushed. The inorganic residue of 18(OH)₂-Mont determined by the ignition method was 63%.

### (Preparation of a polylactic acid-lamellar clay mineral bonded body)

L-lactide of 100 g, 18(OH)₂-Mont of 3.5 g and tin octylate of 200 mg were charged in a reaction vessel, and evacuated to 10⁻² mmHg; then, the temperature was gradually raised with the mixture being fully agitated, and held at 160°C for 1 hr; the reaction product was dissolved in chloroform, and dropped into methanol to isolate and purify poly-L-lactic acid-lamellar clay mineral bonded body (PLLA-Clay #1). The weight-average molecular weight of the poly-L-lactic acid-lamellar clay mineral bonded body thus obtained was about 60,000, and the content of the lamellar clay mineral was 2.0 wt% (in terms of the inorganic content).

### (Preparing a polylactic acid not bonding to a lamellar clay mineral)

D-lactide of 100 g, dodecyl alcohol of 0.1 g and tin octylate of 100 mg were charged in a reaction vessel, and evacuated to 10⁻² mmHg; then, the temperature was gradually raised with the mixture being fully agitated, and held at 160°C for 1 hr; the obtained reaction product was dissolved in chloroform, and dropped into methanol to isolate and purify poly-D-lactic acid (PDLA #1). The weight-average molecular weight of the poly-D-lactic acid thus obtained was about 120,000.

### (Preparing a polylactic acid resin composition, and the DSC measurement in its crystallization)

The poly-L-lactic acid-lamellar clay mineral bonded body (PLLA-Clay #1) of 0.5 g and the poly-D-lactic acid (PDLA #1) of 0.5 g, both obtained as above, was mixed and dissolved in chloroform while being agitated; and the obtained mixture was dropped in a petri dish, and chloroform was removed by the atmospheric drying and the vacuum drying to fabricate a film of a polylactic acid resin composition. The DSC measurement, mentioned before, of the obtained film as a sample was conducted. Here, the retention temperature after melting {(A)°C} was set to be 140°C. The obtained results are shown in Table 1.

### [Examples 2 to 4]

The DSC measurements of the film of the polylactic acid resin composition were conducted as in Example 1, but with a retention temperature after melting {(A)°C} of 120°C (Example 2), that of 100°C (Example 3) and that of 80°C (Example 4). The obtained results are shown in Table 1.

### [Example 5]

A film of a polylactic acid resin composition was fabricated and measured on DSC as in Example 1, but obtaining poly-L-lactic acid-lamellar clay mineral bonded body (PLLA-Clay #2) which had a weight-average molecular weight of about 120,000 and a lamellar clay mineral content of 0.3 wt% (in terms of inorganic content) by charging 18(OH)₂-Mont of 0.5 g in the preparing step of a polylactic acid-lamellar clay mineral bonded body, and using PLLA-Clay #2 instead of PLLA-Clay #1. The obtained results are shown in Table 1.

### [Example 6] -

A film of a polylactic acid resin composition was fabricated and measured on DSC as in Example 1, but obtaining poly-D-lactic acid-lamellar clay mineral bonded body (PDLA-Clay #1) which had a weight-average molecular weight of about 60,000 and a lamellar clay mineral content of 2.0 wt% (in terms of inorganic content) by using D-lactide instead of L-lactide in the preparing step of a polylactic acid-lamellar clay mineral bonded body, obtaining poly-L-lactic acid (PLLA #1) which has a weight-average molecular weight of about 120,000 by using L-lactide instead of D-lactide in the preparation step of a polylactic acid not bonding to a lamellar clay mineral, and using PDLA-Clay #1 instead of PLLA-Clay #1 and PLLA #1 instead of PDLA #1. The obtained results are shown in Table 1.

### [Example 7]

A film of a polylactic acid resin composition was fabricated and measured on DSC as in Example 6, but obtaining poly-D-lactic acid-lamellar clay mineral bonded body (PDLA-Clay #2) which had a weight-average molecular weight of about 120,000 and a lamellar clay mineral content of 0.3 wt% (in terms of inorganic content) by charging the 18(OH)₂-Mont of 0.5 g in the preparing step of a polylactic acid-lamellar clay mineral bonded body, and using PDLA-Clay #2 instead of PDLA-Clay #1. The obtained results are shown in Table 1.

### [Comparative Example 1]

L-lactide of 100 g, dodecyl alcohol of 0.3 g and tin octylate of 100 mg were charged in a reaction vessel, and evacuated to 10⁻² mmHg; then, the temperature was gradually raised with the mixture being fully agitated, and held at 160°C for 1 hr; the obtained reaction product was dissolved in chloroform, and dropped into methanol to isolate and purify poly-L-lactic acid (PLLA #2). The weight-average molecular weight of the poly-L-lactic acid thus obtained was about 60,000.

The poly-L-lactic acid (PLLA-#2) of 0.5 g and the poly-D-lactic acid (PDLA #1) of 0.5 g, both obtained as above, was mixed and dissolved in chloroform while being agitated; and the obtained mixture was dropped in a petri dish, and chloroform was removed by the atmospheric drying and the vacuum drying to fabricate a film of a polylactic acid resin composition. The DSC measurement, mentioned before, of the obtained film as a sample was conducted. Here, the retention temperature after melting {(A)°C} was set to be 140°C. The obtained results are shown in Table 1.

### [Comparative Examples 2 to 4]

The DSC measurements of the film of the polylactic acid resin composition were conducted as in Comparative Example 1, but with a retention temperature after melting {(A)°C} of 120°C (Comparative Example 2), that of 100°C (Comparative Example 3) and that of 80°C (Comparative Example 4). The obtained results are shown in Table 1.

### [Comparative Example 5]

A film of a polylactic acid resin composition was fabricated and measured on DSC as in Comparative Example 1, but using PLLA #1 used in Example 6 instead of PLLA #2. The obtained results are shown in Table 1.

### [Comparative Example 6]

D-lactide of 100 g, dodecyl alcohol of 0.3 g and tin octylate of 100 mg were charged in a reaction vessel, and evacuated to 10⁻² mmHg; then, the temperature was gradually raised with the mixture being fully agitated, and held at 160°C for 1 hr; the obtained reaction product was dissolved in chloroform, and dropped into methanol to isolate and purify poly-D-lactic acid (PDLA #2). The weight-average molecular weight of the poly-D-lactic acid thus obtained was about 60,000.

Then, a film of a polylactic acid resin composition was fabricated and measured on DSC as in Comparative Example 1, but using PDLA #2 obtained above instead of PDLA #1 and PLLA #1 used in Example 6 instead of PLLA #2. The obtained results are shown in Table 1.

### [Comparative Example 7]

### (Kneading of a lamellar clay mineral and poly-L-lactic acid)

A mixture in which poly-L-lactic acid resin (#5400, manufactured by Toyota Motor Corp., a weight-average molecular weight of 140,000) was added with 18(OH)₂-Mont of 2 wt% in terms of inorganic content was melted and kneaded by a twin-screw extruder equipped with screws (TEX30α, manufactured by The Japan Steel Works, Ltd.) at a screw revolving speed of 300 rpm, at a resin temperature of 200°C, at a resin feeding speed of 5 kg/h, to obtain a PLLA-clay composite material.

A film of a polylactic acid resin composition was fabricated and measured on DSC as in Comparative Example 1, but using the PLLA-clay composite material thus obtained instead of PLLA-Clay #1. The obtained results are shown in Table 1.

### [Comparative Example 8]

### (Kneading of a lamellar clay mineral, poly-L-lactic acid and poly-D-lactic acid)

A mixture in which 1 wt% of 18(OH)₂-Mont on an inorganic basis was added to poly-L-lactic acid resin (#5400, manufactured by Toyota Motor Corp., a weight-average molecular weight of 140,000) and poly-D-lactic acid ("PURASORB", manufactured by Purac Inc., pyrolyzed at 160°C for 13 days, a weight-average molecular weight of about 110,000) was melted and kneaded by a twin-screw extruder equipped with screws (TEX30α, manufactured by The Japan Steel Works, Ltd.) at a screw revolving speed of 300 rpm, at a resin temperature of 200°C, at a resin feeding speed of 5 kg/h, to obtain a PLLA-PDLA-clay composite material (kneaded material).

Then, the DSC measurement for the PLLA-PDLA-clay composite material thus obtained was conducted as Example 1. The obtained results are shown in Table 1.

### [Comparative Example 9]

### (Ring-opening polymerization of L-lactide/D-lactide in the presence of a lamellar clay mineral)

L-lactide of 50 g, D-lactide of 50 g, 18(OH)₂-Mont of 3.5 g and tin octylate of 200 mg were charged in a reaction vessel, and evacuated to 10⁻² mmHg; then, the temperature was gradually raised with the mixture being fully agitated, and held at 160°C for 1 hr; the reaction product was dissolved in chloroform, and dropped into methanol to obtain a polylactic acid-clay composite material (L-lactide/D-lactide polymer). The weight-average molecular weight of the polylactic acid-clay composition material thus obtained was about 60,000, and the content of the lamellar clay mineral was 2.0 wt% (in terms of inorganic content).

The DSC measurement for the polylactic acid-clay composite material thus obtained was conducted as Example 1. The obtained results are shown in Table 1.

**Table 1**

| | Polylactic acid resin composition | | Retention temperature (A) | Melting temperature of at most 180°C (homocrystals) | | Melting temperature at of least 190°C (stereocrystals) | | Stereo- crystals ratio |
|---|---|---|---|---|---|---|---|---|
| | | | | Melting temperature | Melting heat quantity Δₕₒₘₒ | Melting temperature 212.4°C | Melting heat quantity ΔHₛₜₑᵣₑₒ | |
| Example 1 | PLLA-Ciay #1 (Mw 60,000) | PDLA #1 (Mw 120,000) | 140°C | not observed | | 212.4°C | 44.8 J/g | 100% |
| Example 2 | PLLA-CJay #1 (Mw 60,000 | PDLA #1 (Mw 120,000) | 120°C | not observed | | 213.0°C | 50.6 J/g | 100% |
| Example 3 | PLLA-Clay #1 (Mw 60,000) | PDLA #1 (Mw 120.000) | 100°C | not observed | | 212.4°C | 43.0 J/g | 100% |
| Example 4 | (Mw 60,000) | (Mw 120,000) | 80°C | not observed | | 212.7°C | 32.1 J/g | 100% |
| Example 5 | PLLA-Clay #2 (Mw 120,000) | PDLA#1 (Mw 120,000) | 140°C | not observed | | 204.4°C | 21.5 J/g | 100% |
| Example 6 | PLLA #1 (Mw 120,000) | PDLA-Clay #1 (Mw 60,000) | 140°C | not observed | | 213.5°C | 46.0 J/g | 100% |
| Example 7 | PLLA #1 (Mw 120,000) | PDLA-Clay #2 (Mw 120,000) | 140°C | not observed | | 202.1°C | 24.3 J/g | 100% |
| Comparative Example1 | PLLA #2 (Mw 60,000) | PDLA #1 (Mw 120,000) | 140°C | 172.0°C | 12.8 J/g | 220.7°C | 29.8 J/g | 70.0% |
| Comparative Example 2 | PLLA #2 (Mw 60,000) | PDLA #1 (Mw 120,000) | 120°C | 169.70°C | 17.4 J/g | 218.7°C | 28.2 J/g | 61.8% |
| Comparative Example 3 | PLLA #2 (Mw 60,000) | PDLA #1 (Mw 120,000) | 100°C | 172.0°C | 20.0 J/g | 220.7°C | 27,1 J/g | 57.% |
| Comparative Example 4 | PLLA #2 (Mw 60,000) | PDLA #1 (Mw 120,000) | 80°C | 171.40°C | 19.7 J/g | 220.7°C | 26.2 J/g | 57.1% |
| Comparative Example 5 | PLLA #1 (Mw 120,000) | PDLA #1 (Mw 120,000) | 140°C | 171.0°C | 10.8 J/g | 216.0°C | 19.1 J/g | 63.9% |
| Comparative Examples 6 | PLLA #1 (Mw 120,000) | PDLA #2 (Mw 60,000) | 140°C | 172.°C | 10.8 J/g | 219.3°C | 24.8 J/g | 69.7% |
| Comparative Example 7 | PLLA-clay composite material (kneaded material) | PDLA #1 (Mw 120,000) | 140°C | 174.7°C | 19.4 J/g | 219.7°C | 17.3 J/g | 47.1% |
| Comparative Example 8 | PLLA-clay composite material (kneaded material) | | 140°C | 174.4°C | 30.8 J/g | 216.4°C | 15.6 J/g | 33.6% |
| Comparative Examples 9 | Polylactic acid-clay composite material (L-lactide/D-lactide polymer) | | 140°C | not observed | | not observed | | - |

As clarified from the results shown in Table 1, in the cases of using the polylactic acid resin composition of the present invention, the stereocrystals only is selectively crystallized in the obtained molded article, and every stereocrystals ratio determined by the DSC measurement is 100%. By contrast, the polylactic acid resin composition of Comparative Examples 1 to 6 in which a polylactic acid (poly-L-lactic acid or poly-D-lactic acid) was not made to be a bonded body to a lamellar clay mineral, but a polylactic acid as is the enantiomer thereof (poly-D-lactic acid or poly-L-lacfic acid) was mixed therewith, a polylactic acid resin composition of Comparative Example 7 in which a kneaded material of a lamellar clay mineral and poly-L-lactic acid (PLLA-clay composite material) was mixed with poly-D-lactic acid, and a kneaded material of a lamellar clay mineral, poly-L-lactic acid and poly-D-lactic acid (PLLA-PDLA-clay composite material) in Comparative Example 8, any of them has a low stereocrystals ratio and is inferior in crystallization speed and the improvement effect in the crystallization degree. A polylactic acid-clay composite material of Comparative Example 9, obtained by the ring-opening polymerization of L-lactide/D-lactide in the presence of a lamellar clay mineral, is not proved to form either of stereocrystals and homocrystals.

### Industrial Applicability

As explained hereinbefore, the present invention provides a polylactic acid resin composition in which crystals of poly-L-lactic acid and poly-D-lactic acid can be selectively crystallized to obtain polylactic acid having a sufficiently high stereocrystals ratio; and a polylactic acid molded article having a sufficiently high stereocrystals ratio can be obtained by melt molding and crystallizing the polylactic acid resin composition.

Therefore, the molded article obtained from the polylactic acid resin composition of the present invention has a high crystallizing ratio and excellent heat resistance, and thus is useful as an automobile part such as a bumper, radiator grill, side molding, garnish, wheel cover, aeropart, instrument panel, door trim, sheet fabric, doorknob and floor mat, housing for household appliances, films for product packaging, waterproof sheets, various containers, bottles and the like. When the molded article of the present invention is used as a sheet, the molded article can be used as a laminate of multi-layered structure by stacking the molded article with paper or another polymer sheet.

## Claims

1. A polylactic acid resin composition comprising a polylactic acid-lamellar clay mineral bonded body **characterized by** consisting of a lamellar clay mineral and one of poly-L-lactic acid and poly-D-lactic acid which is bonded to the lamellar clay mineral, and the other of poly-L-lactic acid and poly-D-lactic acid which is not bonded to the lamellar clay mineral.

2. The polylactic acid resin composition according to claim 1, **characterized in that** the polylactic acid-lamellar clay mineral bonded body is a polylactic acid-lamellar clay mineral bonded body consisting of a lamellar clay mineral organized with an organic onium salt having a hydroxyl group, and one of poly-L-lactic acid and poly-D-lactic acid which is bonded to the lamellar clay mineral through the hydroxyl group of the organic onium salt.

3. The polylactic acid resin composition according to claim 1 or 2, **characterized in that** the polylactic acid-lamellar clay mineral bonded body is poly-L-lactic acid-lamellar clay mineral bonded body or poly-D-lactic acid-lamellar clay mineral bonded body, obtained by mixing a lamellar clay mineral organized with an organic onium salt having a hydroxyl group with polymerizable monomers of L-lactic acid and/or L-lactide or polymerizable monomers of D-lactic acid and/or D-lactide, and polymerizing the polymerizable monomers with the hydroxyl group of the organic onium salt as a reaction site.

4. A process for producing a polylactic acid resin composition of claim 1, **characterized by** comprising a polymerizing step of mixing a lamellar clay mineral organized with an organic onium salt having a hydroxyl group with polymerizable monomers of L-lactic acid and/or L-lactide, and polymerizing the polymerizable monomers with the hydroxyl group of the organic onium salt as a reaction site to obtain poly-L-lactic acid-lamellar clay mineral bonded body, and a mixing step of mixing the poly-L-lactic acid-lamellar clay mineral bonded body with poly-D-lactic acid which is not bonded to the lamellar clay mineral.

5. A process for producing a polylactic acid resin composition of claim 1, **characterized by** comprising a polymerizing step of mixing a lamellar clay mineral organized with an organic onium salt having a hydroxyl group with polymerizable monomers of D-lactic acid and/or D-lactide, and polymerizing the polymerizable monomers with the hydroxyl group of the organic onium salt as a reaction site to obtain poly-D-lactic acid-lamellar clay mineral bonded body, and a mixing step of mixing the poly-D-lactic acid-lamellar clay mineral bonded body with poly-L-lactic acid which is not bonded to the lamellar clay mineral.

6. A molded article **characterized in that** the molded article is obtained by melt molding and crystallizing a polylactic acid resin composition of claim 1 which comprises a polylactic acid-lamellar clay mineral bonded body consisting of a lamellar clay mineral and one of poly-L-lactic acid and poly-D-lactic acid which is bonded to the lamellar clay mineral, and the other of poly-L-lactic acid and poly-D-lactic acid which is not bonded to the lamellar clay mineral.

7. The molded article according to claim 6, **characterized in that** the molded article is a polylactic acid-lamellar clay mineral bonded body consisting of a lamellar clay mineral organized with an organic onium salt having a hydroxyl group, and one of poly-L-lactic acid and poly-D-lactic acid which is bonded to the lamellar clay mineral through the hydroxyl group of the organic onium salt.

8. The molded article according to claim 6 or 7, **characterized in that** the polylactic acid-lamellar clay mineral bonded body is poly-L-lactic acid-lamellar clay mineral bonded body or poly-D-lactic acid-lamellar clay mineral bonded body, obtained by mixing a lamellar clay mineral organized with an organic onium salt having a hydroxyl group with polymerizing monomers of L-lactic acid and/or L-lactide or polymerizable monomers of D-lactic acid and/or D-lactide, and polymerizing the polymerizable monomers with the hydroxyl group of the organic onium salt as a reaction site.

9. The molded article according to any one of claims 6 to 8, **characterized in that** a stereocrystals ratio {(ΔHm, stereo/(ΔHm, homo + ΔHm, stereo)) x 100(%)}, determined from a melting endotherm (ΔHm, homo) of a homocrystals melting peak and a melting endotherm (ΔHm, stereo) of a stereocrystals melting peak measured by DSC measurement, is 0.9X% or more, wherein X is two times the value which is a smaller one of the content (A%) of poly-L-lactic acid and the content (B%) of poly-D-lactic acid, provided that A + B = 100%, where the stereocrystals mean the eutectic crystals of poly-L-lactic acid and poly-D-lactic acid in which poly-L-lactic acid molecules and poly-D-lactic acid molecules make a racemic crystals structure, also known as stereocomplex crystals, and the homocrystals mean crystals of poly-L-lactic acid or poly-D-lactic acid.

## Patentansprüche

1. Polymilchsäure-Harzzusammensetzung, umfassend einen verbundenen Körper aus Polymilchsäure-lamellares Tonmineral, **dadurch gekennzeichnet, dass** er aus einem lamellaren Tonmineral und aus einer, einer poly-L-Milchsäure und einer poly-D-Milchsäure, besteht, die an das lamellare Tonmineral gebunden ist, und aus einer weiteren, einer poly-L-Milchsäure und einer poly-D-Milchsäure, die nicht an das lamellare Tonmineral gebunden ist.

2. Polymilchsäure-Harzzusammensetzung nach Anspruch 1, **dadurch gekennzeichnet, dass** der verbundene Körper aus Polymilchsäure-lamellares Tonmineral ein verbundener Körper aus Polymilchsäure-lamellares Tonmineral ist, der aus einem lamellaren Tonmineral besteht, das mit einem organischen Onium-Salz mit einer Hydroxylgruppe assoziiert ist und einer, einer poly-L-Milchsäure und einer poly-D-Milchsäure, die durch die Hydroxylgruppe des Onium-Salzes an das lamellare Tonmineral gebunden ist.

3. Polymilchsäure-Harzzusammensetzung nach Anspruch 1 oder 2, **dadurch gekennzeichnet, dass** der verbundene Körper aus Polymilchsäure-lamellares Tonmineral ein verbundener Körper aus poly-L-Milchsäure - lamellares Tonmineral ist oder ein verbundener Körper aus poly-D-Milchsäure - lamellares Tonmineral, der durch Mischen eines lamellaren Tonminerals, das mit einem organischen Onium-Salz mit einer Hydroxylgruppe assoziiert ist, mit polymerisierbaren Monomeren von L-Milchsäure und/oder L-Lactid oder polymerisierbaren Monomeren von D-Milchsäure und/oder D-Lactid, und Polymerisieren der polymerisierbaren Monomere mit der Hydroxylgruppe des organischen Onium-Salzes als Reaktionsstelle, erhalten wird.

4. Verfahren zum Herstellen einer Polymilchsäure-Harzzusammensetzung nach Anspruch 1, **dadurch gekennzeichnet, dass** es einen Polymerisationsschritt umfasst, in dem das lamellare Tonmineral, das mit einem organischen Onium-Salz mit einer Hydroxylgruppe assoziiert ist, mit polymerisierbaren Monomeren von L-Milchsäure und/oder L-Lactid gemischt wird und die polymerisierbaren Monomere mit der Hydroxylgruppe des organischen Onium-Salzes als Reaktionsstelle, zum Erhalt des verbundenen Körpers aus poly-L-Milchsäure - lamellares Tonmineral, polymerisiert werden, und einen Schritt des Mischens, in dem der verbundene Körper aus poly-L-Milchsäure - lamellares Tonmineral mit poly-D-Milchsäure, die nicht an das lamellare Tonmineral gebunden ist, gemischt wird.

5. Verfahren zum Herstellen einer Polymilchsäure-Harzzusammensetzung nach Anspruch 1, **dadurch gekennzeichnet, dass** es einen Polymerisierungsschritt umfasst, in dem das lamellare Tonmineral, das mit einem organischen Onium-Salz mit einer Hydroxylgruppe assoziiert ist, mit polymerisierbaren Monomeren von D-Milchsäure und/oder D-Lactid gemischt wird und die der polymerisierbaren Monomere mit der Hydroxylgruppe des organischen Onium-Salzes als Reaktionsstelle, zum Erhalt des verbundenen Körpers aus poly-L-Milchsäure - lamellares Tonmineral, polymerisiert werden, und einen Schritt des Mischens, in dem der verbundene Körper aus poly-D-Milchsäure - lamellares Tonmineral mit poly-L-Milchsäure, die nicht an das lamellare Tonmineral gebunden ist, gemischt wird.

6. Formteil, **dadurch gekennzeichnet, dass** das Formteil durch Schmelzformen und Kristallisieren der Polymilchsäure-Harzzusammensetzung nach Anspruch 1 erhalten wird, die einen verbundenen Körper aus Polymilchsäure-lamellares Tonmineral umfasst, der aus einem lamellaren Tonmineral und aus einer, einer poly-L-Milchsäure und einer poly-D-Milchsäure, besteht, die an das lamellare Tonmineral gebunden ist, und aus einer weiteren, einer poly-L-Milchsäure und einer poly-D-Milchsäure, die nicht an das lamellare Tonmineral gebunden ist.

7. Formteil nach Anspruch 6, **dadurch gekennzeichnet, dass** das Formteil ein verbundener Körper aus Polymilchsäure-lamellares Tonmineral ist, der aus einem lamellaren Tonmineral besteht, das mit einem organischen Onium-Salz mit einer Hydroxylgruppe assoziiert ist und einer, einer poly-L-Milchsäure und einer poly-D-Milch-säure, die durch die Hydroxylgruppe des Onium-Salzes an das lamellare Tonmineral gebunden ist.

8. Formteil nach Anspruch 6 oder 7, **dadurch gekennzeichnet, dass** der verbundene Körper aus Polymilchsäure-lamellares Tonmineral ein verbundener Körper aus poly-L-Milchsäure - lamellares Tonmineral ist oder ein verbundener Körper aus poly-D-Milchsäure - lamellares Tonmineral, der durch Mischen eines lamellaren Tonminerals, das mit einem organischen Onium-Salz mit einer Hydroxylgruppe assoziiert ist, mit polymerisierbaren Monomeren von L-Milchsäure und/oder L-Lactid oder polymerisierbaren Monomeren von D-Milchsäure und/oder D-Lactid, und Polymerisieren der polymerisierbaren Monomere mit der Hydroxylgruppe des organischen Onium-Salzes als Reaktionsstelle, erhalten wird.

9. Formteil nach einem der Ansprüche 6 bis 8, **dadurch gekennzeichnet, dass** das Verhältnis der Stereokristalle {(ΔHm, stereo/(ΔHm homo + ΔHm, stereo)) x 100(%)}, das durch die Schmelzendotherme (ΔHm homo) eines Homokristall-Schmelzpeaks und die Schmelzendotherme (ΔHm, stereo) von Stereokristall-Schmelzpeaks bestimmt wird, die mit einer DSC-Messung gemessen werden, 0,9X% oder mehr beträgt, wobei X der zweifache Wert ist, der ein geringerer ist als der Gehalt (A%) von poly-L-Milchsäure und der Gehalt (B%) von poly-D-Milchsäure, vorausgesetzt, dass A+B=100% betragen, wobei Stereokristalle die eutektischen Kristalle von poly-L-Milchsäure und poly-D-Milchsäure bezeichnen, in denen die poly-L-Milchsäure-Moleküle und die poly-D-Milchsäure-Moleküle eine racemische Kristallstruktur bilden, die auch als Stereokomplex-Kristalle bekannt ist, und Homokristalle Kristalle von poly-L-Milchsäure oder poly-D-Milchsäure bezeichnen.

## Revendications

1. Composition de résine d'acide polylactique comprenant un corps lié d'acide polylactique-minéral argileux lamellaire **caractérisé en ce qu'**il consiste en un minéral argileux lamellaire et un parmi l'acide poly-L-lactique et l'acide poly-D-lactique qui est lié au minéral argileux lamellaire, et
l'autre parmi l'acide poly-L-lactique et l'acide poly-D-lactique qui n'est pas lié au minéral argileux lamellaire.

2. Composition de résine d'acide polylactique selon la revendication 1, **caractérisée en ce que** le corps lié d'acide polylactique-minéral argileux lamellaire est un corps lié d'acide polylactique-minéral argileux lamellaire constitué d'un minéral argileux lamellaire organisé avec un sel organique d'onium ayant un groupe hydroxyle, et l'un parmi l'acide poly-L-lactique et l'acide poly-D-lactique qui est lié au minéral argileux lamellaire par le groupe hydroxyle du sel organique d'onium.

3. Composition de résine d'acide polylactique selon la revendication 1 ou 2, **caractérisée en ce que** le corps lié d'acide polylactique-minéral argileux lamellaire est un corps lié d'acide poly-L-lactique-minéral argileux lamellaire ou un corps lié d'acide poly-D-lactique-minéral argileux lamellaire, obtenu par le mélange d'un minéral argileux lamellaire organisé avec un sel organique d'onium ayant un groupe hydroxyle avec des monomères polymérisables d'acide L-lactique et/ou de L-lactide ou des monomères polymérisables d'acide D-lactique et/ou de D-lactide, et la polymérisation des monomères polymérisables avec le groupe hydroxyle du sel organique d'onium comme site réactionnel.

4. Procédé pour produire une composition de résine d'acide polylactique selon la revendication 1, **caractérisé en ce qu'**il comprend une étape de polymérisation de mélange d'un minéral argileux lamellaire organisé avec un sel organique d'onium ayant un groupe hydroxyle avec des monomères polymérisables d'acide L-lactique et/ou de L-lactide, et la polymérisation des monomères polymérisables avec le groupe hydroxyle du sel organique d'onium comme site réactionnel pour obtenir un corps lié d'acide poly-L-lactique-minéral argileux lamellaire, et une étape de mélange de mélange du corps lié d'acide poly-L-lactique-minéral argileux lamellaire avec de l'acide poly-D-lactique qui n'est pas lié au minéral argileux lamellaire.

5. Procédé pour produire une composition de résine d'acide polylactique selon la revendication 1, **caractérisé en ce qu'**il comprend une étape de polymérisation de mélange d'un minéral argileux lamellaire organisé avec un sel organique d'onium ayant un groupe hydroxyle avec des monomères polymérisables d'acide D-lactique et/ou de D-lactide, et la polymérisation des monomères polymérisables avec le groupe hydroxyle du sel organique d'onium comme site réactionnel pour obtenir un corps lié d'acide poly-D-lactique-minéral argileux lamellaire, et une étape de mélange de mélange du corps lié d'acide poly-D-lactique-minéral argileux lamellaire avec de l'acide poly-L-lactique qui n'est pas lié au minéral argileux lamellaire.

6. Article moulé **caractérisé en ce que** l'article moulé est obtenu par un moulage à l'état fondu et la cristallisation d'une composition de résine d'acide polylactique selon la revendication 1 qui comprend un corps lié d'acide polylactique-minéral argileux lamellaire constitué d'un minéral argileux lamellaire et d'un parmi l'acide poly-L-lactique et l'acide poly-D-lactique qui est lié au minéral argileux lamellaire, et l'autre de l'acide poly-L-lactique et l'acide poly-D-lactique qui n'est pas lié au minéral argileux lamellaire.

7. Article moulé selon la revendication 6, **caractérisé en ce que** l'article moulé est un corps lié d'acide polylactique-minéral argileux lamellaire constitué d'un minéral argileux lamellaire avec un sel organique d'onium ayant un groupe hydroxyle, et d'un parmi l'acide poly-L-lactique et l'acide poly-D-lactique qui est lié au minéral argileux lamellaire par le groupe hydroxyle du sel organique d'onium.

8. Article moulé selon la revendication 6 ou 7, **caractérisé en ce que** le corps lié d'acide polylactique-minéral argileux lamellaire est un corps lié d'acide poly-L-lactique-minéral argileux lamellaire ou un corps lié d'acide poly-D-lactique-minéral argileux lamellaire, obtenu par le mélange d'un minéral argileux lamellaire organisé avec un sel organique d'onium ayant un groupe hydroxyle avec des monomères de polymérisation d'acide L-lactique et/ou de L-lactide ou des monomères polymérisables d'acide D-lactique et/ou de D-lactide, et la polymérisation des monomères polymérisables avec le groupe hydroxyle du sel organique d'onium comme site réactionnel.

9. Article moulé selon l'une quelconque des revendications 6 à 8, **caractérisé en ce qu'**un rapport des stéréocristaux {(ΔHm, stéréo/(ΔHm, homo + ΔHm, stéréo)) x 100(%)}, déterminé à partir d'un endotherme de fusion (ΔHm, homo) d'un pic de fusion des homocristaux et d'un endotherme de fusion (ΔHm, stéréo) d'un pic de fusion des stéréocristaux mesurés par une mesure DSC, est de 0,9X% ou plus, dans lequel X est deux fois la valeur qui est une valeur plus petite parmi la teneur (A%) en acide poly-L-lactique et la teneur (B%) en acide poly-D-lactique, à condition que A + B = 100 %, où les stéréocristaux désignent les cristaux eutectiques d'acide poly-L-lactique et d'acide poly-D-lactique dans lesquels les molécules d'acide poly-L-lactique et les molécules d'acide poly-D-lactique forment une structure de cristaux racémique, également connue sous le nom de cristaux stéréocomplexes, et les homocristaux désignent les cristaux d'acide poly-L-lactique ou d'acide poly-D-lactique.
